(19) Europäisches Patentamt / European Patent Office / Office européen des brevets

(11) EP 1 465 778 B1

(12) # EUROPÄISCHE PATENTSCHRIFT

(45) Veröffentlichungstag und Bekanntmachung des Hinweises auf die Patenterteilung:
**11.04.2007 Patentblatt 2007/15**

(21) Anmeldenummer: **03706350.0**

(22) Anmeldetag: **08.01.2003**

(51) Int Cl.:
***B41N 6/02*** *(2006.01)* ***C09J 7/02*** *(2006.01)*
***B41F 27/12*** *(2006.01)*

(86) Internationale Anmeldenummer:
**PCT/EP2003/000107**

(87) Internationale Veröffentlichungsnummer:
**WO 2003/057497 (17.07.2003 Gazette 2003/29)**

(54) **VERWENDUNG EINES HAFTKLEBEBANDES ZUR VERKLEBUNG VON DRUCKPLATTEN**
USE OF AN ADHESIVE TAPE FOR THE ADHESION OF PRINTING PLATES
UTILISATION D'UNE BANDE ADHESIVE POUR COLLER DES PLAQUES D'IMPRESSION

(84) Benannte Vertragsstaaten:
**DE ES FR GB IT**

(30) Priorität: **08.01.2002 DE 10200364**

(43) Veröffentlichungstag der Anmeldung:
**13.10.2004 Patentblatt 2004/42**

(73) Patentinhaber: **tesa AG**
**20253 Hamburg (DE)**

(72) Erfinder:
- **BLANK, Carsten**
**21255 Tostedt (DE)**
- **FIENCKE, Jochen**
**22453 Hamburg (DE)**
- **HUSEMANN, Marc**
**22605 Hamburg (DE)**
- **RUNGE, Torsten**
**21149 Hamburg (DE)**

(56) Entgegenhaltungen:
**EP-A- 0 349 270**
**EP-A- 0 452 808**
**EP-A- 0 921 170**
**EP-A- 1 008 640**
**EP-A- 1 068 961**
**GB-A- 1 533 431**
**US-A- 4 871 631**
**US-A- 5 314 962**
**US-A- 5 476 712**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 465 778 B1

## Beschreibung

Die Erfindung betrifft die Verwendung eines Haftklebebänder mit einer physikalisch selbstvernetzenden Acrylathaftklebemasse auf Basis zumindest eines Blockcopolymers für die Verklebung von Druckplatten.

In der Druckindustrie sind unterschiedliche Verfahren bekannt, um Motive mittels druckender Vorlagen auf beispielsweise. Papier zu übertragen. Eine Möglichkeit besteht im sogenannten Flexodruck. Eine Ausführungsform des Flexodrucks stellt nun wiederum die Verwendung mehrschichtiger Photopolymer-Druckplatten mit flexiblem Unterbau dar, wobei diese Art des Druckens schon seit längerer Zeit zum Stand der Technik zählt. Die Druckplatten bestehen dabei aus mehreren Schichten unterschiedlichen polymeren Materials mit jeweils speziellen Aufgaben. Zum Beispiel weisen die Druckplatten "nyloflex MA" und "nyloflex ME" der Firma BASF AG drei Schichten auf, nämlich eine lichtempfindliche Reliefschicht, darunter eine Stabilisierungsfolie sowie als Basis eine elastische Trägerschicht.

Im Flexodruckverfahren werden flexible Druckplatten auf Druckzylinder oder Sleeves verklebt. Zur Verklebung werden in der Regel doppelseitige Haftklebebänder eingesetzt, an die sehr hohe Anforderungen gestellt werden. Für den Druckprozess muss das Haftklebeband eine bestimmte Härte aber auch eine bestimmte Flexibilität aufweisen. Diese Eigenschaften müssen sehr genau eingestellt werden, damit das erzeugte Druckbild frei von Fehlstellen ist. Weitere große Anforderungen werden an die Haftklebemasse gestellt, da hier die Klebkraft ebenfalls hoch sein sollte, damit sich die Druckplatte nicht von dem doppelseitigen Haftklebeband oder das Haftklebeband vom Zylinder ablöst. Dies gilt auch bei erhöhten Temperaturen von 40 - 60 °C und bei hohen Druckgeschwindigkeiten. Neben dieser Eigenschaft sollte die Haftklebemasse aber auch reversibel sein, da häufig das Tape oder die Druckplatten verklebt und dann zur Repositionierung wieder abgelöst werden müssen. Diese Ablösbarkeit spielt sich in der ersten Zeit nach der Verklebung ab.

Zudem ist es erwünscht, dass das Haftklebeband und insbesondere die Druckplatte sehr leicht und ohne großen Kraftaufwand nach dem Druckprozess wieder entfernt werden kann. Zudem sollten keine Rückstande auf der Druckplatte und auf dem Zylinder verbleiben. Zusammenfassend werden somit sehr hohe Anforderungen an die für diesen Einsatz geeigneten doppelseitige Haftklebebänder gestellt.

In der US 4,380,956 wird ein Prozess zur Fixierung einer Druckplatte für den Flexodruckprozess beschrieben. Für diesen Prozess werden auch Haftklebemassen eingesetzt, die aber nicht genauer spezifiziert wurden.

In der GB 1,533,431 wird ein doppelseitiges Haftklebeband beansprucht, dass eine elastomere Schicht enthält, die wiederum durch fragile Luftblasen aufgeschäumt ist. Die Luftblasen werden unter Druck während der Flexodruckanwendung zerdrückt.

In der US 4,574,697 werden doppelseitige Haftklebebänder beansprucht, die als Trägermaterial einen flexiblen Polyurethanschaum aufweisen, der auf einer PET-Folie (Polyethylenterephthalat) fixiert ist. Die äußeren Schichten bestehen aus Haftklebemassen.

Das beschriebene Haftklebeband soll reversibel sein und sich von dem Druckzylinder und von der Druckplatte entfernen lassen. Ein ähnlicher Produktaufbau wurde in der EP 0 206 760 beschrieben. Hier wurde als flexibler Schaumträger ein Polyethylenschaum eingesetzt.

In der US 4,574,712 wird in Analogie zu der US 4,574,697 ein ähnlicher Haftklebebandaufbau beschrieben. Bezüglich der Haftklebemassen findet hier die Einschränkung statt dass die Klebkraft zu der Druckplatte und zu dem Druckzylinder kleiner sein sollte als zu der Trägerfolie und dem Trägerschaum.

In der US 3,983,287 wird ein Laminat beschrieben, das als Trägermaterial ein nicht-kompressibles Elastomer enthält. Die Kompressibilität wird durch Kugel erreicht, die unter Druck zerstört werden und somit eine Flexibilität erzeugen.

In der US 5,613,942 werden Haftklebebänder beschrieben, die besonders geeignet für Verklebungen auf feuchten Oberflächen sind. Es wird auch erwähnt, dass solche Haftklebebänder zur Verklebung von Druckplatten geeignet sind.

In der US 5,476,712 wird ebenfalls ein doppelseitiges Haftklebeband beschrieben, dass im Flexodruckverfahren eingesetzt wird. Dieses Haftklebeband enthält wiederum ein thermoplastisches Elastomer, wobei hier eine Zellförmige Struktur vorliegt, die durch expandierende Mikropartikel erzeugt werden.

In den obengenannten Fällen werden sehr viele unterschiedliche Haftklebemassen eingesetzt. Naturkautschukklebemassen besitzen gute klebrige Eigenschaften sind aber nicht sehr scherfest bei Raumtemperatur und altern durch den Abbau über die im Polymer enthaltenden Doppelbindungen.

SIS oder SEBS basierende Haftklebemassen sind in der Regel sehr weich und haftklebrig und neigen auch bei hohen Temperaturen zu erweichen. Verklebt man unter Spannung die Druckplatte auf dem Druckzylinder mit einer SIS oder SEBS haltigen Haftklebemasse, so neigt die Druckplatte zum ablösen, obwohl die Klebkraft hoch ist.

Acrylathaftklebemassen sind dagegen sehr gut zur Verklebung von Druckplatten auf Druckzylindern geeignet, müssen aber im Herstellungsprozess nach der Beschichtung vernetzt werden. Zudem sind harte und wenig klebrige Acrylathaftklebemassen nur sehr begrenzt zugänglich, da die Homopolymerisate der Acrylate in der Regel eine niedrige Glasübergangstemperatur besitzen. Ausnahme sind sehr langkettige Acrylate oder Acrylatmonomere mit einem hohen Molekulargewicht. Diese lassen sich dann aber aus sterischen Gründen nur schlecht, d. h. sehr langsam polymerisieren. Weiterhin neigen Acrylathaftklebemassen durch polare Wechselwirkungen zu einem Aufziehen, so dass sich durch einen Klebkraftabstieg sich letztendlich die Druckplatte nur schwer entfernen lässt.

Aufgabe der Erfindung ist es, die Verklebung von Druckplatten auf Druckhülsen oder Druckzylindern oder dergleichen zu ermöglichen, wobei die Verklebung reversibel und rückstandsfrei erfolgen soll und insbesondere die Nachteile des Standes der Technik minimieren bzw. vermeiden soll.

Gelöst wird die Aufgabe überraschend durch die Verwendung eines Haftklebebandes mit einer physikalisch selbstvernetzenden Haftklebemasse, wie sie im folgenden näher beschrieben wird. Die Erfindung erlaubt ein rückstands- und zerstörungsfreies Ablösen der Druckplatte von dem Untergrund, auf dem sie verklebt war.

Dementsprechend betrifft der Anspruch 1 die Verwendung eines Haftklebebandes mit einer selbstvernetzenden Acrylathaftklebemasse für die Verklebung von Druckplatten (Klischees), insbesondere auf Druckzylindern und/oder Druckhülsen (Sleeves).

Sofern hier und im folgenden von "Acrylaten" und "Acrylathaftklebemasse" die Rede ist, seien in diese Begriffe die entsprechenden Methacrylate und Methacrylat-haftklebemassen explizit mit eingeschlossen, entsprechend ebenfalls Haftklebemassen auf Basis von Acrylaten und Methacrylaten.

Das Haftklebeband wird insbesondere eingesetzt zur Fixierung von mehrschichtigen Fotopolymer-Druckplatten auf Druckzylindern oder Druckhülsen.

Vorteilhaft handelt es sich bei dem Haftklebeband um ein solches, welches beidseitig klebend ausgerüstet ist. Die Haftklebemasse wird dabei erfindungsgemäß vorteilhaft derart gewählt, dass sie selbstständig ohne weitere technische Modifikationen durch Selbstorganisation klebrige und nichtklebrige Segmente ausbilden kann, insbesondere durch Phasenseparierung oder Mikrophasenseparierung.

Eine vorteilhafte Variante der erfindungsgemäßen Verwendung sieht dementsprechend derart aus, dass die Haftklebemasse in Form zumindest einer Schicht vorliegt, wobei die zumindest eine Schicht der Haftklebemasse klebrige und nichtklebrige Bereiche aufweist, insbesondere in Form von Domänen (disperse Phase) in einer Matrix (kontinuierliche Phase).

Insbesondere bevorzugt erlauben die für die erfindungsgemäße Verwendung eingesetzten selbstvernetzenden Haftklebemassen ein rückstands- und zerstörungsfreies Ablösen der Druckplatte von dem Untergrund, auf welchem sie verklebt ist.

Bevorzugt weist das Haftklebeband zumindest einen Träger auf, insbesondere in Form einer Folie, eines Schaumes (eines Schaumstoffs) und/oder eines Verbundes der beiden vorgenannten. Bevorzugt findet die Verklebung der Druckplatte mit dem Haftklebeband derart statt, dass die zumindest eine Schicht der selbstvernetzenden Haftklebemasse auf der der Druckplatte zugewandten Seite des Haftklebebandes liegt.

Bei einem doppelseitig beschichteten Haftklebeband kann die zweite Haftklebeschicht ebenfalls aus einer selbstvernetzenden Haftklebemasse bestehen, je nach Anwendungsbereich kann es aber auch von Vorteil sein, eine andere, dem Stande der Technik zuzuordnende Haftklebemasse oder Klebemasse einzusetzen. Für den Fall, dass das Klebeband auf beiden Seiten eine selbstvernetzende Haftklebemassenschicht aufweist, lässt sich das Haftklebeband nicht nur von der Druckplatte, sondern außerdem sehr leicht und rückstandsfrei vom Druckzylinder bzw. der Druckhülse entfernen.

Ebenfalls ist es möglich, das Klebeband "umgekehrt" zu verwenden, dass also die auf der der Druckplatte abgewandten Seite des Klebebandes eine selbstvernetzende Haftklebemasse ist und die auf Seiten der Druckplatte liegende eine Klebemasse auf einer anderen Basis. Das im folgenden zu den einzelnen Haftklebemasseschichten näher ausgeführte ist dann entsprechend für die jeweils andere Haftklebemassenschicht zu lesen.

Die selbstvernetzende Haftklebemasse ist eine auf Basis zumindest eines Blockcopolymers. Es hat sich überraschend herausgestellt, dass Haftklebemassen auf Acrylatblockcopolymerbasis für die erfindungsgemäße Verwendung eine Reihe von Vorteilen aufzeigen:

- Nutzungsmöglichkeit einer großen Anzahl von Monomeren für die Synthese der Blockcopolymere und zur Herstellung der Haftklebemasse, so dass eine breite Palette von Haftklebeeigenschaften durch die chemische Zusammensetzung eingestellt werden kann,
- Ermöglichung der Herstellung dicker, hoch kohäsiver Haftklebemassenschichten, insbesondere für repositionierbare Haftklebebänder,
- Verzichtsmöglichkeit einer zusätzlichen Vernetzung, insbesondere einer solchen durch actinische Bestrahlung,
- Wahlmöglichkeit bei Einsatz der Comonomere, welche eine Steuerung der Wärmescherfestigkeit ermöglicht, insbesondere auch eine anhaltend gute Kohäsion und damit gute Halteleistung bei hohen Temperaturen (z.B. $> + 60$ °C),
- Reversibilität auf verschiedenen Oberflächen.

Vorteilhaft werden solche Haftklebemassen eingesetzt, bei welchen das zumindest eine Blockcopolymer mindestens die Einheit P(A)-P(B)-P(A) aus wenigstens einem Polymerblock P(B) und wenigstens zwei Polymerblöcken P(A) aufweist, wobei

- P(A) unabhängig voneinander Homo- und/oder Copolymerblöcke aus Monomeren A repräsentieren, wobei die

Polymerblöcke P(A) jeweils eine im Bereich von + 20 °C bis + 175 °C liegende Erweichungstemperatur aufweisen,

- P(B) einen Homo- oder Copolymerblock aus Monomeren B repräsentiert, wobei der Polymerblock P(B) eine im Bereich von - 130 °C bis + 10 °C liegende Erweichungstemperatur aufweist,
- und die Polymerblöcke P(A) und P(B) nicht homogen miteinander mischbar sind.

Unter Erweichungstemperatur wird in diesem Zusammenhang bei amorphen Systemen die Glasübergangstemperatur und bei semikristallinen Polymeren die Schmelztemperatur verstanden. Glastemperaturen werden als Ergebnisse aus quasistationären Verfahren, wie z. B. Differential Scanning Calorimetry, angegeben.

Als im erfinderischen Sinne besonders vorteilhaft haben sich Haftklebesysteme für die Verklebung von Druckplatten herausgestellt, bei denen der Aufbau zumindest eines Blockcopolymers durch eine oder mehrere der folgenden allgemeinen Formeln beschrieben werden kann:

P(A)-P(B)-P(A) (I)

P(B)-P(A)-P(B)-P(A)-P(B) (II)

$[P(A)-P(B)]_nX$ (III)

$[P(A)-P(B)]_nX[P(A)]_m$ (IV)

- wobei n = 3 bis 12, m = 3 bis 12 und X eine multifunktionelle Verzweigungseinheit darstellt, also ein chemisches Bauelement, über das mehrere Polymerarme miteinander verknüpft sind,
- wobei die Polymerblöcke P(A) unabhängig voneinander Homo- und/oder Copolymerblöcke aus den Monomeren A repräsentieren, wobei die Polymerblöcke P(A) jeweils eine im Bereich von + 20 °C bis + 175 °C liegende Erweichungstemperatur aufweisen,
- wobei die Polymerblöcke P(B) unabhängig voneinander Homo- und/oder Copolymerblöcke aus den Monomeren B repräsentieren, wobei die Polymerblöcke P(B) jeweils eine im Bereich zwischen - 130 °C bis + 10 °C liegende Erweichungstemperatur aufweisen.

Als Basis für die Haftklebemassen können auch mehrere verschiedene Blockcopolymere auf Acrylatbasis gewählt werden. Bevorzugt sind dann mehrere, besonders bevorzugt alle Blockcopolymere nach einer oder mehreren der vorstehend genannten Formeln zu beschreiben.

Bevorzugt beträgt der Anteil der Blockcopolymere an der Haftklebemasse in Summe mindestens 50 Gew.-%.

Bei den Polymerblöcken P(A) kann es sich um Polymerketten einer einzigen Monomersorte aus der Gruppe A oder um Copolymere aus Monomeren verschiedener Strukturen aus der Gruppe A handeln. Insbesondere können die eingesetzten Monomere A in ihrer chemischen Struktur und/oder in der Seitenkettenlänge variieren. Die Polymerblöcke umfassen somit die Spanne zwischen vollkommen homogenen Polymeren über Polymere aus Monomeren gleicher chemischer Grundstruktur, aber unterschiedlicher Kettenlänge und solchen gleicher Kohlenstoffzahl, aber unterschiedlicher Isomerie bis hin zu statistisch polymerisierten Blöcken aus unterschiedlich langen Monomeren mit unterschiedlicher Isomerie aus der Gruppe A. Das entsprechende gilt für die Polymerblöcke P(B) bezüglich der Monomere aus der Gruppe B.

Die Einheit P(A)-P(B)-P(A) kann dabei sowohl symmetrisch [entsprechend $P^1(A)$-P(B)-$P^2(A)$ mit $P^1(A) = P^2(A)$] als auch unsymmetrisch [etwa entsprechend der Formel $P^3(A)$-P(B)-$P^4(A)$ mit $P^3(A) \neq P^4(A)$, wobei aber sowohl $P^3(A)$ als auch $P^4(A)$ jeweils Polymerblöcke im Sinne der Definition für P(A) seien] aufgebaut sein.

Eine vorteilhafte Ausführung ist es, wenn die Blockcopolymere einen symmetrischen Aufbau derart aufweisen, dass in der Kettenlänge und/oder der chemischen Struktur identische Polymerblöcke P(A) und/oder dass in der Kettenlänge und/oder der chemischen Struktur identische Polymerblöcke P(B) vorliegen.

$P^3(A)$ und $P^4(A)$ können sich insbesondere in ihrer chemischen Zusammensetzung und/oder ihrer Kettenlänge unterscheiden.

Als Monomere für den Elastomerblock P(B) werden vorteilhaft Acrylmonomere eingesetzt. Hierfür sind prinzipiell alle dem Fachmann geläufigen Acrylverbindungen, welche sich zur Synthese von Polymeren eignen, einsetzbar. Bevorzugt werden solche Monomere gewählt, welche Glasübergangstemperaturen des Polymerblocks P(B) auch in Kombination mit einem oder mehreren weiteren Monomeren von kleiner +10 °C bedingen und die Oberflächenspannung absenken.

Entsprechend können bevorzugt die Vinylmonomere gewählt werden.

Zur Erzielung einer Glasübergangstemperatur $T_G$ der Polymere von $T_G \leq 10$ °C werden entsprechend dem vorstehend und im weiteren gesagten die Monomere sehr bevorzugt derart ausgesucht und die mengenmäßige Zusammensetzung der Monomermischung vorteilhaft derart gewählt, dass sich nach der Gleichung (G1) (in Analogie zur ***Fox***-Gleichung,

vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Für die Präparation der Polymerblöcke P(B) werden vorteilhaft
zu 75 bis 100 Gew.-% Acrylsäure- und/oder Methacrylsäurederivate der allgemeinen Struktur

$$CH_2{=}CH(R^1)(COOR^2) \qquad \text{(V)}$$

eingesetzt, wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt,
und gegebenenfalls bis zu 25 Gew.-% Vinylverbindungen (VI), welche günstigenfalls funktionelle Gruppen enthalten.

Acrylmonomere, die sehr bevorzugt im Sinne der Verbindung (V) als Komponenten für Polymerblöcke P(B) eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere, wie z.B. 2-Ethylhexylacrylat und Isooctylacrylat sowie cyclische Monomere wie z.B. Cyclohexyl- oder Norbornylacrylat und Isobornylacrylat.

Weiterhin können optional als Monomere im Sinne der Definition (VI) für Polymerblöcke P(B) Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in $\alpha$-Stellung enthalten. Auch hier seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril.

Als besonders bevorzugte Beispiele für vinylgruppenhaltige Monomere im Sinne der Definition (VI) für den Elastomerblock P(B) eignen sich weiterhin Hydroxyethylacrylat, Hydroxypropylacrylat, Hydroxyethylmethacrylat, Hydroxypropylmethacrylat, n-Methylolacrylamid, Acrylsäure, Methacrylsäure, Allylalkohol, Maleinsäureanhydrid, Itaconsäureanhydrid, Itaconsäure, Benzoinacrylat, acryliertes Benzophenon, Acrylamid und Glycidylmethacrylat, um nur einige zu nennen.

In einer bevorzugten Ausführungsform der Haftklebesysteme zur Verklebung von Druckplatten enthält einer der oder enthalten mehrere der Polymerblöcke eine oder mehrere aufgepfropfte Seitenketten. Dabei wird nicht eingeschränkt, ob solche Systeme durch einen *graft-from-* (Aufpolymerisation einer Seitenketten ausgehend von einem bestehenden Polymerrückgrat) oder *graft-to*-Prozeß (Anbindung von Polymerketten an ein Polymerrückgrat über polymeranaloge Reaktionen) erhalten werden.

Insbesondere zur Herstellung solcher Blockcopolymere können als Monomere B derartig funktionalisierte Monomere eingesetzt werden, die einen *graft-from*-Prozeß zum Aufpfropfen von Seitenketten ermöglichen. Hier sind insbesondere Acryl- und Methacrylmonomere zu nennen, die als Funktionalisierung Halogene tragen oder alle anderen funktionellen Gruppen, die beispielsweise einen ATRP-Prozeß (Atom Transfer Radical Polymerization) erlauben. In diesem Zusammenhang sei auch die Möglichkeit genannt über Makromonomere gezielt Seitenketten in die Polymerketten einzuführen. Die Makromonomere können wiederum aufgebaut sein entsprechend der Monomere B.

In einer speziellen Ausführung dieser Erfindung sind eine oder mehrere funktionelle Gruppen in die Polymerblöcke P(B) eingebaut, die eine strahlenchemische Vernetzung der Polymerblöcke insbesondere mittels UV-Bestrahlung oder durch Bestrahlung mit schnellen Elektronen erlauben. Als Monomereinheiten können mit dieser Zielsetzung insbesondere Acrylester genutzt werden, welche einen ungesättigten Alkylrest mit 3 bis 18 Kohlenstoffatomen enthalten, der mindestens eine Kohlenstoff-Kohlenstoff-Doppelbindung enthält. Für mit Doppelbindungen modifizierte Acrylate eignen sich besonders vorteilhaft Allylacrylat und acrylierte Zimtsäureester. Neben Acrylmonomeren lassen sich sehr vorteilhaft als Monomere für den Polymerblock P(B) auch Vinylverbindungen mit während der (radikalischen) Polymerisation des Polymerblockes P(B) nicht reaktiven Doppelbindungen einsetzen. Besonders bevorzugte Beispiele für entsprechende Comonomere sind Isopren und/oder Butadien, aber auch Chloropren.

Ausgangsmonomere für die Polymerblöcke P(A) werden bevorzugt derart ausgewählt, dass die resultierenden Polymerblöcke P(A) mit den Polymerblöcken P(B) nicht mischbar sind und entsprechend Mikrophasenseparation eintritt. Vorteilhafte Beispiele für Verbindungen, welche als Monomere A eingesetzt, werden, sind Vinylaromaten, Methylmethacrylat, Cyclohexylmethacrylat, Isobornylmethacrylat und Isobornylacrylat.

Besonders bevorzugte Beispiele sind Methylmethacrylat und Styrol, wobei diese Aufzählung keinen Anspruch auf Vollständigkeit erhebt.

Weiterhin können die Polymerblöcke P(A) aber auch als Copolymer aufgebaut sein, das zu mindestens 75 % aus den vorstehenden Monomeren A, das zu einer hohen Erweichungstemperatur führt, oder einem Gemisch dieser Monomere bestehen kann, aber bis zu 25 % Monomere B enthält, die zu einer Erniedrigung der Erweichungstemperatur des Polymerblocks P(A) führen und/oder die Oberflächenenergie weiter reduzieren. In diesem Sinne seien beispielhaft aber nicht ausschließlich Alkylacrylate genannt, die entsprechend der Struktur (V) und dem hierzu gesagten definiert sind.

In einer weiteren günstigen Ausführungsform der erfinderischen Haftklebemasse sind Polymerblöcke P(A) und/oder P(B) derart funktionalisiert, dass eine thermisch initiierte Vernetzung durchgeführt werden kann. Als Vernetzer können unter anderem in günstiger Weise gewählt werden: Epoxide, Aziridine, Isocyanate, Polycarbodiimide und Metallchelate, um nur einige zu nennen.

Ein bevorzugtes Charakteristikum der für die erfindungsgemäßen Haftklebesysteme eingesetzten Blockcopolymere ist, dass ihre Molmasse $M_n$ zwischen ca. 10.000 und ca. 600.000 g/mol, bevorzugt zwischen 30.000 und 400.000 g/mol, besonders bevorzugt zwischen 50.000 g/mol und 300.000 g/mol liegt. Der Anteil der Polymerblöcke P(A) liegt vorteilhaft zwischen 5 und 49 Gewichtsprozent des gesamten Blockcopolymers, bevorzugt zwischen 7,5 und 35 Gewichtsprozent, besonders bevorzugt zwischen 10 und 30 Gewichtsprozent. Die Polydispersität des Blockcopolymers liegt bevorzugt bei kleiner 3, gegeben durch den Quotienten aus Massenmittel $M_w$ und Zahlenmittel $M_n$ der Molmassenverteilung.

Die Verhältnisse der Kettenlängen der Blockcopolymere P(A) zu denen der Blockcopolymere P(B) werden in sehr vorteilhafter Vorgehensweise so gewählt, dass die Blockcopolymere P(A) als disperse Phase ("Domänen") in einer kontinuierlichen Matrix der Polymerblöcke P(B) vorliegen. Dies ist bevorzugt der Fall bei einem Gehalt an Polymerblöcken P(A) von kleiner als 25 Gew.-%. Die Domänen können bevorzugt kugelförmig oder verzerrt kugelförmig vorliegen. Die Ausbildung von hexagonal gepackten zylindrischen Domänen der Polymerblöcke P(A) ist ebenfalls im erfinderischen Sinne möglich. In einer weiteren Ausführungsform zielt man auf eine asymmetrische Gestaltung der Triblockcopolymere, wobei in linearen Systemen die Blocklängen der endständigen Polymerblöcke P(A) unterschiedlich sind. Die Kugelmorphologie ist besonders zu bevorzugen, wenn eine Erhöhung der inneren Festigkeit der Haftklebemasse nötig ist, sowie zur Verbesserung der mechanischen Eigenschaften.

Erfindungsgemäß besonders bevorzugt wird das Molekulargewicht $M_N$ des Mittelblocks P(B) auf 200.000 g/mol begrenzt, da durch die kürzeren Polymersegmente zwischen den Hartblöcken P(A) diese sich zu einer größeren Zahl an die Oberfläche bewegen und somit der Siebdruck-Effekt durch die Hartdomänen besonders ausgeprägt ist.

Weiterhin kann es vorteilhaft sein, Blends der obengenannten Blockcopolymere mit Diblockcopolymeren P(A)-P(B) einzusetzen, wobei zur Herstellung der entsprechenden Polymerblöcke P(A) und P(B) die gleichen Monomere wie oben genutzt werden können. Außerdem kann es von Vorteil sein, der aus den Blockcopolymeren, insbesondere aus Triblockcopolymeren (I), oder der aus einem Blockcopolymer/Diblockoopolymer-Blend bestehenden Haftklebemasse zur Verbesserung ihrer Eigenschaften Polymere P'(A) und/oder P'(B) zuzusetzen.

Dementsprechend betrifft die Erfindung weiterhin reversible Systeme, bei denen die Haftklebemasse einen Blend eines oder mehrerer Blockcopolymere mit einem Diblockcopolymer P(A)-P(B),

- wobei die Polymerblöcke P(A) (der einzelnen Diblockcopolymere) unabhängig voneinander Homo- und/oder Copolymerblöcke aus den Monomeren A repräsentieren, wobei die Polymerblöcke P(A) jeweils eine Erweichungstemperatur im Bereich von + 20 °C bis + 175 °C aufweisen,
- wobei die Polymerblöcke P(B) (der einzelnen Diblockcopolymere) unabhängig voneinander Homo- und/oder Copolymerblöcke aus den Monomeren B repräsentieren, wobei die Polymerblöcke P(B) jeweils eine Erweichungstemperatur im Bereich von -130 °C bis + 10 °C aufweisen,

und/oder mit Polymeren P'(A) und/oder P'(B),

- wobei die Polymere P'(A) Homo- und/oder Copolymere aus den Monomeren A repräsentieren, wobei die Polymere P'(A) jeweils eine Erweichungstemperatur im Bereich von + 20 °C bis + 175 °C aufweisen,
- wobei die Polymere P'(B) Homo- und/oder Copolymere aus den Monomeren B repräsentieren, wobei die Polymere P'(B) jeweils eine Erweichungstemperatur im Bereich von -130 °C bis + 10 °C aufweisen,
- wobei die Polymere P'(A) beziehungsweise P'(B) bevorzugt mit den Polymerblöcken P(A) beziehungsweise P(B) mischbar sind,

darstellt.

Sofern sowohl Polymere P'(A) und Polymere P'(B) zugemischt sind, werden diese vorteilhaft derart gewählt, dass die Polymere P'(A) und P'(B) nicht homogen miteinander mischbar sind.

Als Monomere für die Diblockcopolymere P(A)-P(B), für die Polymere P'(A) beziehungsweise P'(B) werden

bevorzugt die bereits genannten Monomere der Gruppen A und B eingesetzt.

Die Diblockcopolymere weisen bevorzugt eine Molmasse $M_N$ zwischen 5.000 und 600.000 g/mol, mehr bevorzugt zwischen 15.000 und 400.000 g/mol, besonders bevorzugt zwischen 30.000 und 300.000 g/mol auf. Sie besitzen vorteilhaft eine Polydispersität $D = M_w/M_N$ von nicht mehr als 3. Es ist günstig, wenn der Anteil der Polymerblöcke P(A) in Bezug auf die Zusammensetzung des Diblockcopolymers zwischen 3 und 50 Gew.-%, bevorzugt zwischen 5 und 35 Gew.-% liegt.

Vorteilhaft können auch die Diblockcopolymere eine oder mehrere aufgepfropfte Seitenketten aufweisen.

Typische Einsatzkonzentration von Diblockcopolymeren im Blend betragen bis zu 250 Gewichts-Teile auf 100 Gewichtsteile höhere Blockcopolymere enthaltend die Einheit P(A)-P(B)-P(A). Die Polymere P'(A) beziehungsweise P'(B) können als Homo- und auch als Copolymere aufgebaut sein. Sie werden entsprechend dem oben gesagten vorteilhaft derart gewählt, dass sie mit den Blockcopolymeren P(A) beziehungsweise P(B) verträglich sind. Die Kettenlänge der Polymere P'(A) beziehungsweise P'(B) ist in bevorzugter Weise derart gewählt, dass sie die des mit ihr bevorzugt mischbaren bzw. assoziierbaren Polymerblocks nicht übersteigt, vorteilhaft 10 % niedriger, sehr vorteilhaft 20 % niedriger ist als diese. Der B-Block kann auch so gewählt werden, dass seine Länge die Hälfte der Blocklänge des B-Blocks des Triblockcopolymers nicht übersteigt.

Zur Herstellung der in den erfindungsgemäß verwendeten Haftklebemassen eingesetzten Blockcopolymere können prinzipiell alle kontrolliert oder lebend verlaufenden Polymerisationen eingesetzt werden, ebenso auch Kombinationen verschiedener kontrollierter Polymerisationsverfahren. Hierbei seien z.B., ohne den Anspruch auf Vollständigkeit zu besitzen, neben der anionischen Polymerisation die ATRP, die Nitroxid/TEMPO- kontrollierte Polymerisation oder mehr bevorzugt der RAFT-Prozess genannt, also insbesondere solche Verfahren, die eine Kontrolle der Blocklängen, Polymerarchitektur oder auch, aber nicht notwendigerweise, der Taktizität der Polymerkette erlauben.

Radikalische Polymerisationen können in Gegenwart eines organischen Lösungsmittels oder in Gegenwart von Wasser oder in Gemischen aus organischen Lösungsmitteln und/oder organischer Lösungsmittel mit Wasser oder in Substanz durchgeführt werden. Bevorzugt wird so wenig Lösungsmittel wie möglich eingesetzt. Die Polymerisationszeit für radikalische Prozesse beträgt - je nach Umsatz und Temperatur - typischerweise zwischen 4 und 72 h.

Bei der Lösungsmittelpolymerisation werden als Lösemittel vorzugsweise Ester gesättigter Carbonsäuren (wie Ethylacetat), aliphatische Kohlenwasserstoffe (wie n-Hexan, n-Heptan oder Cyclohexan), Ketone (wie Aceton oder Methylethylketon), Siedegrenzenbenzin, aromatische Lösungsmittel wie Toluol oder Xylol oder Gemische vorgenannter Lösungsmittel verwendet. Für die Polymerisation in wäßrigen Medien beziehungsweise Gemischen aus organischen und wäßrigen Lösungsmitteln werden zur Polymerisation bevorzugt Emulgatoren und Stabilisatoren zugesetzt. Als Polymerisationsinitiatoren werden vorteilhaft übliche radikalbildende Verbindungen wie beispielsweise Peroxide, Azoverbindungen und Peroxosulfonate eingesetzt. Auch Initiatorengemische eignen sich hervorragend.

Zur Radikalstabilisierung werden in günstiger Vorgehensweise Nitroxide des Typs (NIT 1) oder (NIT 2) eingesetzt:

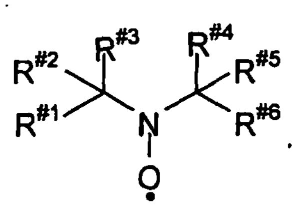

(NIT 1)

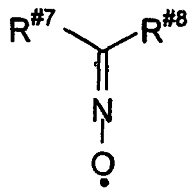

(NIT 2)

wobei $R^{\#1}$, $R^{\#2}$, $R^{\#3}$, $R^{\#4}$, $R^{\#5}$, $R^{\#6}$, $R^{\#7}$, $R^{\#8}$ unabhängig voneinander folgende Verbindungen oder Atome bedeuten:

i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester $-COOR^{\#9}$ , Alkoxide $-OR^{\#10}$, und/oder Phosphonate $-PO(OR^{\#11})_2$, wobei $R^{\#9}$, $R^{\#10}$ und/oder $R^{\#11}$ für Reste aus der Gruppe ii) stehen.

Verbindungen der Struktur (NIT 1) oder (NIT 2) können auch an Polymerketten jeglicher Art gebunden sein

(vorrangig in dem Sinne, dass zumindest einer der oben genannten Reste eine derartige Polymerkette darstellt) und somit zum Aufbau der Blockcopolymere als Makroradikale oder Makroregler genutzt werden.

Mehr bevorzugt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoe-PROXYL, 3-t-Butyl-PROXYL, 3,4-Di-t-butyl-PROXYL.
- 2,2,6,6-Tetramethyl-1-piperidinyloxyl pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

Eine Reihe weiterer Polymerisationsmethoden, nach denen die Haftklebemassen in alternativer Vorgehensweise hergestellt werden können, lassen sich aus dem Stand der Technik wählen:
der US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen der EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafter Weise zur Synthese der Blockcopolymere die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Kompiexe (der EP 0 824 111 A1; der EP 826 698 A1; der EP 824 110 A1; der EP 841 346 A1; der EP 850 957 A1) eingesetzt werden. Die unterschiedlichen Möglichkeiten der ATRP sind ferner in den Schriften der US 5,945,491 A, der US 5,854,364A und der US 5,789,487 A beschrieben.

Weiterhin vorteilhaft kann das erfindungsgemäße genutzte Blockcopolymer über eine anionische Polymerisation hergestellt werden. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird im allgemeinen durch die Struktur $P_L(A)$-Me repräsentiert, wobei Me ein Metall der Gruppe I des Periodensystems, wie z.B. Lithium, Natrium oder Kalium, und $P_L(A)$ ein wachsender Polymerblock aus den Monomeren A ist. Die Molmasse des herzustellenden Polymerblocks wird durch das Verhältnis von Initiatorkonzentration zu Monomerkonzentration vorgegeben. Zum Aufbau der Blockstruktur werden zunächst die Monomere A für den Aufbau eines Polymerblocks P(A) hinzugegeben, dann wird anschließend durch Zugabe der Monomere B ein Polymerblock P(B) angeknüpft und nachfolgend durch erneute Zugabe von Monomeren A ein weiterer Polymerblock P (A) anpolymerisiert, so dass ein Triblockcopolymer P(A)-P(B)-P(A) entsteht. Alternativ kann P(A)-P(B)-M durch eine geeignete difunktionelle Verbindung gekuppelt werden. Auf diesem Weg sind auch Sternblockcopolymere $(P(B)\text{-}P(A))_n$ zugänglich. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr

bevorzugten Version sind die Liganden und Coinitiatoren so gewählt, dass Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Als sehr bevorzugter Herstellprozeß wird eine Variante der RAFT-Polymerisation (reversible addition-fragmentation chain transfer polymerization) durchgeführt. Der Polymerisationsprozeß ist z. B. in den Schriften WO 98/01478 A1 und WO 99/31144 A1 ausführlich beschrieben. Zur Herstellung von Triblockcopolymeren eignen sich besonders vorteilhaft Trithiocarbonate der allgemeinen Struktur R'''-S-C(S)-S-R''' (Macromolecules 2000, 33, 243-245), mittels derer in einem ersten Schritt Monomere für die Endblöcke P(A) polymerisiert werden. In einem zweiten Schritt wird anschließend der Mittelblock P(B) synthetisiert. Nach der Polymerisation der Endblöcke P(A) kann die Reaktion abgebrochen und reinitiiert werden. Ferner kann auch ohne Reaktionsunterbrechung sequentiell polymerisiert werden. In einer sehr vorteilhaften Variante werden beispielsweise die Trithiocarbonate (VIII) und (IX) oder die Thioverbindungen (X) und (XI) zur Polymerisation eingesetzt, wobei $\phi$ ein Phenylring, der unfunktionalisiert oder durch Alkyl- oder Arylsubstituenten, die direkt oder über Ester- oder Etherbrücken verknüpft sind, funktionalisiert sein kann, oder eine Cyanogruppe sein kann, oder einen gesättigten oder ungesättgten aliphatischen Rest sein kann . Der Phenylring $\phi$ kann optional einen oder mehrere Polymerblöcke, beispielsweise Polybutadien, Polyisopren, Polychloropren oder Poly(meth)acrylat, das entsprechend der Definition für P(A) oder P(B) aufgebaut sein kann, oder Polystyrol tragen, um nur einige zu nennen. Funktionalisierungen können beispielsweise Halogene, Hydroxygruppen, Epoxidgruppen, stickstoff- oder schwefelenthaltende Gruppen sein, ohne dass diese Liste Anspruch auf Vollständigkeit erhebt.

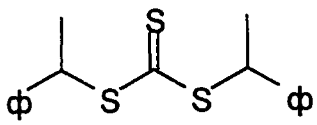

(TTC 1)

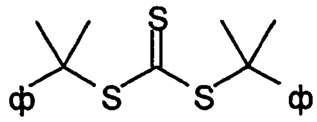

(TTC 2)

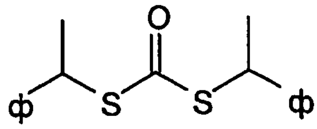

(THI 1)

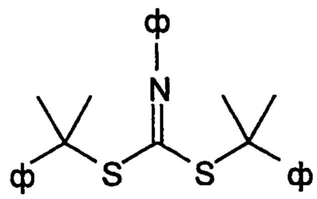

(THI 2)

Außerdem können Thioester der allgemeinen Struktur

$R^{\$1}$-C(S)-S-$R^{\$2}$ (THE)

zum Einsatz kommen, insbesondere, um asymmetrische Systeme herzustellen. Dabei können $R^{\$1}$ und $R^{\$2}$ unabhängig voneinander gewählt werden und $R^{\$1}$ ein Rest aus einer der folgenden Gruppen i) bis iv) und $R^{\$2}$ ein Rest aus einer der folgenden Gruppen i) bis iii) sein kann:

i) $C_1$- bis $C_{18}$-Alkyl, $C_2$- bis $C_{18}$-Alkenyl, $C_2$- bis $C_{18}$-Alkinyl, jeweils linear oder verzweigt; Aryl-, Phenyl-, Benzyl-, aliphatische und aromatische Heterozyklen.

ii) $-NH_2$, $-NH-R^{\$3}$, $-NR^{\$3}R^{\$4}$, $-NH-C(O)-R^{\$3}$, $-NR^{\$3}-C(O)-R^{\$4}$, $-NH-C(S)-R^{\$3}$, $-NR^{\$3}-C(S)-R^{\$4}$,

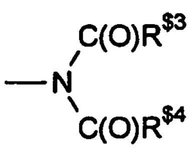 , 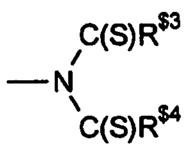 , 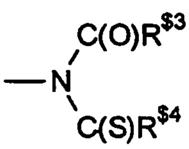

wobei $R^{\$3}$ und $R^{\$4}$ unabhängig voneinander gewählte Reste aus der Gruppe i) sind.
iii) -S-$R^{\$5}$, -S-C(S)-$R^{\$5}$, wobei $R^{\$5}$ ein Rest aus einer der Gruppen i) oder ii) sein kann.
iv) -O-$R^{\$6}$, -O-C(O)-$R^{\$6}$, wobei $R^{\$6}$ ein Rest gewählt aus einer der Gruppen i) oder ii) sein kann.

In Verbindung mit den obengenannten kontrolliert radikalisch verlaufenden Polymerisationen werden Initiatorsysteme bevorzugt, die zusätzlich weitere radikalische Initiatoren zur Polymerisation enthalten, insbesondere thermisch zerfallende radikalbildende Azo- oder Peroxoinitiatoren. Prinzipiell eignen sich hierfür jedoch alle für Acrylate bekannten üblichen Initiatoren. Die Produktion von C-zentrierten Radikalen ist im Houben-Weyl, Methoden der Organischen Chemie, Vol. E19a, S. 60ff beschrieben. Diese Methoden werden in bevorzugter Weise angewendet. Beispiele für Radikalquellen sind Peroxide, Hydroperoxide und Azoverbindungen. Als einige nicht ausschließliche Beispiele für typische Radikalinitiatoren seinen hier genannt: Kaliumperoxodisulfat, Dibenzoylperoxid, Cumolhydroperoxid, Cyclohexanonperoxid, Cyclohexylsulfonylacetylperoxid, Di-tert-butylperoxid, Azodiisobutyronitril, Diisopropylpercarbonat, tert-Butylperoctoat, Benzpinacol. In einer sehr bevorzugten Variante wird als radikalischer Initiator 1,1'-Azo-bis-(cyclohexylnitril) (Vazo 88®, DuPont®) oder 2,2-Azo-bis-(2-methylbutannitril) (Vazo 67®, DuPont®) verwendet. Weiterhin können auch Radikalquellen verwendet werden, die erst unter UV-Bestrahlung Radikale freisetzen.

Beim konventionellen RAFT-Prozess wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden.

Die oben gebeschriebenen Haftklebemassen können aus Lösung oder aus der Schhmelze beschichtet werden. In einer Ausführung der Erfindung wird das Lösemittel bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen.

Zur vorteilhaften erfindungsgemäßen Weiterentwicklung können den blockcopolymerhaltigen Haftklebemassen Klebharze beigemischt werden. Prinzipiell lassen sich alle in dem entsprechenden Polyacrylatmittelblock P(B) löslichen Harze verwenden. Geeignete Klebharze umfassen unter anderem Kolophonium und Kolophoniumderivate (Kolophoniumester, auch durch z. B. Disproportionierung oder Hydrierung stabilisierte Kolophoniumderivate), Polyterpenharze, Terpenphenolharze, Alkylphenolharze, aliphatische, aromatische und aliphatisch-aromatische Kohlenwasserstoffharze, um nur einige zu nennen. Vorrangig werden Harze gewählt, die vorzugsweise mit dem Elastomerblock verträglich sind. Der Gewichtsanteil der Harze am Blockcopolymer beträgt typischerweise bis zu 40 Gew. %, mehr bevorzugt bis zu 30 Gew. %.

Für eine spezielle Art der Ausführung der Erfindung können auch Harze verwendet werden, die mit dem Polymerblock P(A) verträglich sind.

Weiterhin können optional Weichmacher (Plastifizierungsmittel), füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z. B. in Form von primären und sekundären Antioxidantien oder in Form von Lichtschutzmitteln zugesetzt werden.

Bevorzugt wird die innere Festigkeit (Kohäsion) der Haftklebemasse durch die physikalische Vernetzung der Polymerblöcke P(A) erzeugt. Die so erhaltene physikalische Vernetzung ist typischerweise thermoreversibel. Für eine nichtreversible Vernetzung können die Haftklebemassen zusätzlich chemisch vernetzt werden. Hierzu können die acrylatblockcopolymerhaltigen Haftklebemassen, welche für die erfindungsgemäßen reversiblen Systeme eingesetzt werden, optional verträgliche Vernetzersubstanzen enthalten. Als Vernetzer eignen sich z. B. Metallchelate, multifunktionelle Isocyanate, multifunktionelle Amine oder multifunktionelle Alkohole. Auch multifunktionelle Acrylate lassen sich vorteilhaft als Vernetzer für eine actinische Bestrahlung verwenden.

Zur optionalen Vernetzung mit UV-Licht werden den polyacrylathaltigen Blockcopolymeren, welche in den erfindungsgemäßen Systemen zum Einsatz kommen, UV-absorbierende Photoinitiatoren zugesetzt. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London zu Rate gezogen werden.

Prinzipiell ist es auch möglich, die erfindungsgemäß eingesetzten Haftklebemassen mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Für die zum Druckzylinder gerichtete Seite des Haftklebebandes (im folgenden als "gegenüberliegende Haftklebemassenschicht" bezeichnet, siehe beispielsweise Figur 1, Schicht 9. Weiterhin ist entsprechend von "gegenüberliegender Haftklebemasse" die Rede, hiermit ist die Haftklebemasse gemeint, die als Haftklebemasse zur Bildung der gegenüberliegenden Haftklebemassenschicht dient) können prinzipiell alle dem Fachmann bekannten Haftklebemassen eingesetzt werden. So eignen sich beispielsweise auf Kautschuk basierende Haftklebemassen, Synthesekautschukhaftklebemassen, Haftklebemassen auf Basis von Polysilikonen, Polyurethanen, Polyolefine oder Polyacrylaten. Bevorzugt kann die gegenüberliegende Haftklebemasse eine konventionelle Polyacrylathaftklebemasse sein, in einer zweiten bevorzugten Ausführung ist es eine selbstvernetzende Haftklebemasse auf Basis der Blockcopolymere.

Die gegenüberliegenden Haftklebesysteme können die gleiche oder eine unterschiedliche Zusammensetzung wie diejenige auf Druckplattenseite besitzen. Die Zusammensetzung entspricht vorteilhaft der bereits beschriebenen zur Druckplatte gerichteten Haftklebemasse.

Die Acrylathaftklebemassen bestehen besonders bevorzugt zu mindestens 50 Gew.-% aus Polymeren aus Acrylsäureester und/oder Methacrylsäureester bzw. deren freien Säuren mit der folgenden Formel

$$CH_2 = CH(R_1)(COOR_2),$$

wobei $R_1$ = H oder $CH_3$ und $R_2$ eine Kohlenwasserstoffkette mit 1 - 30 C-Atomen oder H ist.

Zur Polymerisation werden die Monomere dermaßen gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen.
Zur Erzielung einer bevorzugten Glasübergangstemperatur $T_G$ der Polymere von $T_G \leq 10$ °C werden entsprechend dem vorstehend gesagten die Monomere sehr bevorzugt derart ausgesucht und die mengenmäßige Zusammensetzung der Monomermischung vorteilhaft derart gewählt, dass sich nach der ***Fox***-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Als Monomere zur Herstellung der gegenüberliegenden Haftklebemasse werden bevorzugt die bereits zur Herstellung der Acrylatblockcopolymere genannten Monomere eingesetzt, nämlich Acryl- oder Methacrylmomonerem mit Kohlenwasserstoffresten mit 4 bis 14 C-Atomen, bevorzugt mit 4 bis 9 C-Atomen (spezifische Beispiele: Methlacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat), weiterhin monofunktionelle Acrylate bzw. Methacrylate von überbrückten unsubstituierten und/oder substituierten (z.B. durch C1-6-Alkylgruppen, Halogen oder Cyanogruppen) Cycloalkylalkoholen, insbesondere bestehend aus zumindestens 6 C-Atomen (spezifische Beispiele: Cyclohexylmethacrylate, Isobornylacrylat, Isobornylmethacrylate und 3,5-Dimethyladamantylacrylat), weiterhin Monomere mit einer oder mehreren polaren Gruppen (z.B. Carboxyl, Sulfon- und Phosphonsäure, Hydroxy-, Lactam und Lacton, N-substituiertes Amid, N-substituiertes Amin, Carbamat-, Epoxy-, Thiol-, Ether, Alkoxy-, Cyan- oder ännliches), weiterhin basische Monomere sind z.B. N,N-Dialkyl Substituierte Amide, wie z.B.

N,N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid.
Weitere besonders bevorzugte Beispiele für einsetzbare Monomere sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Gycerylmethacrylat, 6-Hydroxyhexylmethacrylat, Vinylessigsäure, Tetrahydro-fufurylacrlyat, β-Acryloyloxypropionsäure, Trichloracrylsäure, Fumarsäure, Crotorisäure, Aconitsäure, Dimethylacrylsäure, wobei diese Aufzählung nicht abschließend ist.
Weiterhin bevorzugt werden als Monomere Vinylester, Vinylether, Vinylhalogenide, Vinylidenhalogenide, Vinylverbindungen mit aromatischen Cyclen und Heterocyclen in α-Stellung eingesetzt (Beispiele für vorgenannte: genannt: Vinylacetat, Vinylformamid, Vinylpyridin, Ethylvinylether, Vinylchlorid, Vinylidenchlorid und Acrylonitril), weiterhin Monomere, die eine hohe statische Glasübergangstemperatur besitzen, weiterhin aromatische Vinylverbindungen, wie z.B. Styrol, bevorzugt mit aromatischen Kernen aus $C_4$- bis $C_{18}$-Bausteinen, gegebenenfalls auch mit Heteroatomen (besonders bevorzugte Beispiele: 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und methacrylat, 2-Naphthylacrylat und -methacrylat sowie Mischungen aus diesen Monomeren).

Zur Herstellung der gegenüberliegenden Poly(meth)acrylathaftklebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60-147 beschrieben. Diese Methoden werden in bevorzugter Weise in Analogie angewendet.
Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. Sehr vorteilhaft wird als radikalischer Initiator 1,1'-Azo-bis-(cyclohexancarbonsäurenitril) (Vazo 88™ der Fa. DuPont) oder Azodiisobutyronitril (AIBN) verwendet.

Die mittleren Molekulargewichte $M_N$ der bei der radikalischen Polymerisation entstehenden gegenüberliegenden Haftklebemassen werden sehr bevorzugt derart gewählt, dass sie in einem Bereich von 20.000 bis 2.000.000 g/mol liegen; speziell für die weitere Verwendung als Schmelzhaftkleber werden Haftklebemassen mit mittleren Molekulargewichten $M_N$ von 100.000 bis 500.000 g/mol hergestellt. Die Bestimmung des mittleren Molekulargewichtes erfolgt über Größenausschlußchromatographie (SEC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder -hexylester), halogenierte Kohlenwasserstoffe (z.B. Chlorbenzol), Alkanole (z.B. Methanol, Ethanol, Ethylenglycol, Ethylenglycolmonomethylether) und Ether (z.B. Diethylether, Dibutylether) oder Gemische davon. Die wäßrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Ein anderes vorteilhaftes Herstellungsverfahren für die gegenüberliegenden Polyacrylathaftklebemassen ist die anionische Polymerisation. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Für die klebtechnischen Eigenschaften kann es von Vorteil sein, die gegenüberliegende Haftklebemasse zu vernetzen. Für eine UV-Vernetzung werden dann bevorzugt UV-Photoinitiatoren zugesetzt. Die Photoinitiatoren können vom Typ Norrish I oder Norrish II sein. Einige Gruppen von Photoinitiatoren seien im folgenden aufgezählt: Benzophenon-, Acetophenon-, Benzil-, Benzoin-, Hydroxyalkylphenon-, Phenylcyclohexylketon-, Anthrachinon-, Trimethylbenzoyl phosphinoxid-, Methylthiophenylmorpholinketon-, Aminoketone-, Azobenzoine, Thioxanthon-, Hexarylbisimidazol-, Triazin-, oder Fluorenon, wobei jeder dieser Reste zusätzlich mit einem oder mehreren Halogenatomen und/oder einer oder mehreren Alkoxygruppen und/oder einer oder mehreren Aminogruppen oder Hydroxygruppen substituiert sein kann. Ein repräsentativer Überblick wir in "Photoinitiation Photopolymerization and Photocuring, Fundamentals and Applications, von J.-P. Fouassier, Hanser Publishers, München, Wien, New York 1995" gegeben. Ergänzend kann betrachtet werden "Chemistry & Technology of UV & EB formulation for Coatings, Inks & Paints, Volume 5, A. Carroy, C. Decker, J.P. Dowling, P. Pappas, B. Monroe, ed. By P.K.T. Oldring, publ. By SITA Technology, London, England 1994".

Für den Fall, dass die gegenüberliegende Haftklebemasse aus Lösung aufgetragen wird, kann es von Vorteil sein, 0.05 bis 3 Gew.-%, mehr bevorzugt 0.1 bis 2 Gew.-% Vernetzer basierend auf dem Gewichtsanteil der Monomere der Klebemasse hinzuzugeben.

Der Vernetzer ist typischer Weise ein Metallchelat oder eine organische Verbindung, dass mit einer funktionellen Gruppe eines Comonomers reagiert und somit direkt mit dem Polymer reagiert. Für die thermische Vernetzung sind weiterhin auch Peroxide geeignet. Für Säuregruppen-enthaltende Polymere können auch bi- oder multifunktionelle Isocyanate und bi- oder multifunktionelle Epoxide eingesetzt werden.
Als thermische Vernetzer eignen sich z. B. Aluminium-(III)-acetylacetonat, Titan-(IV)-acetylacetonat oder Eisen-(III)-acetylacetonat. Es lassen sich aber auch z.B. die entsprechenden Zirkoniumverbindungen zur Vernetzung einsetzen. Neben den Acetylacetonaten eigenen sich ebenfalls die ensprechenden Metallalkoxide, wie z.B. Titan-(IV)-n-butoxid oder Titan-(IV)-isopropoxid.
Weiterhin lassen sich zur thermischen besonders bevorzugt multifunktionelle Isocyanate der Firma Bayer einsetzen, wobei hier auf den Handelsnamen Desmodur™ hingewiesen sei. Weitere Vernetzer können bi- oder multifunktionelle Aziridine, Oxazolidine oder Carbodiimide sein.

Es ist für die Vernetzung mit actinischer Strahlung wird die gegenüberliegende Haftklebemasse optional mit einem Vernetzer abgemischt. Bevorzugte unter Strahlung vernetzende Substanzen gemäß dem Verfahren sind z.B. bi- oder multifunktionelle Acrylate oder bi- oder multifunktionelle Urethanacrylate oder bi- oder multifunktionelle Methacrylate. Einfache Beispiele hierfür sind 1,6-Hexandioldiacrylat, Pentaerythritoltetraacrylat, Trimethylolpropan triacrylat, oder 1,2-Ethylenglycol diacrylat. Verwendet werden können hier aber auch alle weiteren, dem Fachmann geläufigen bi- oder multifunktionellen Verbindungen, die in der Lage sind, Polyacrylate unter Strahlung zu vernetzen.

Für die Veränderung der klebtechnischen Eigenschaften der hergestellten Poly(meth)acrylate als gegenüberliegende Haftklebemassen werden die Polymere zur Optimierung optional mit zumindest einem Harz abgemischt. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

In einer weiteren vorteilhaften Weiterentwicklung werden zu der gegenüberliegenden Haftklebemasse ein oder mehrere Weichmacher, wie z.B. niedermolekulare Polyacrylate, Phthalate, Walöweichmacher (wasserlösliche Weichmacher) oder Weichharze hinzudosiert.

Die gegenüberliegenden Acrylathaftklebemassen können des weiteren mit einem oder mehreren Additiven wie Alterungsschutzmitteln, Lichtschutzmitteln, Ozonschutzmitteln, Fettsäuren, Harzen, Keimbildnern, Blähmitteln, Compoundierungsmitteln und/oder Beschleunigern abgemischt sein.
Weiterhin können sie mit einem oder mehreren Füllstoffen wie Fasern, Ruß, Zinkoxid, Titandioxid, Voll- oder Hohlglas (mikro)kugeln, Mikrokugeln aus anderen Materialien, Kieselsäure, Silikaten und Kreide versetzt sein, wobei auch der Zusatz von blockierungsfreien Isocyanaten möglich ist.

Insbesondere für die Verwendung als Haftklebemasse kann es von Vorteil sein, wenn das Polyacrylat aus der Schmelze als Schicht aufgebracht wird.

Hierfür werden die wie im vorhergehenden beschriebenen Poly(meth)acrylate zu einem Hotmelt aufkonzentriert, Dieser Prozess findet bevorzugt in einem Aufkonzentrationsextruder statt. Die Klebemasse wird dann in einer günstigen Variante des Verfahrens als Heißschmelzmasse in Form einer Schicht auf einen Träger oder auf ein Trägermaterial aufgetragen.

Daher werden vor der Vernetzung die Poly(meth)acrylate vorteilhaft auf einen Träger aufgetragen. Die Beschichtung erfolgt aus Lösung oder aus der Schmelze auf das Trägermaterial. Für den Auftrag aus der Schmelze wird das Lösemittel bevorzugt in einem Aufkonzentrationsextruder unter vermindertem Druck abgezogen, wobei beispielsweise Ein- oder Doppelschneckenextruder eingesetzt werden können, die vorteilhaft das Lösemittel in verschiedenen oder gleichen Vakuumstufen abdestillieren und über eine Feedvorwärmung verfügen. Nach der Aufkonzentration beträgt der Lösungsmittelgehalt bevorzugt ≤ 2 Gew.-%, besonders bevorzugt ≤ 0.5 Gew.-%. Das Poly(meth)acrylat wird dann vorteilhaft auf dem Träger vernetzt.

Für die Vernetzung kann es von Vorteil sein, die gegenüberliegende Haftklebemasse mit UV-Strahlung zu bestrahlen. Die UV-Bestrahlung erfolgt dann in einem Wellenlängenbereich von 200 bis 450 nm, insbesondere unter Verwendung von Quecksilber-Hochdruck- oder -Mitteldruck-Lampen bei einer Leistung von 80 bis 240 W/cm. Zur UV-Vernetzung kann aber auch monochromatische Strahlung in Form von Lasern verwendet werden. Um Überhitzungen zu vermeiden, kann es angebracht sein, den UV-Strahlengang teilweise abzuschatten. Weiterhin können spezielle Reflektoren Systeme eingesetzt werden, die als Kaltlichtstrahler fungieren um somit Überhitzungen zu vermeiden.

Weiterhin kann es von Vorteil sein, die gegenüberliegende Acrylathaftklebemasse mit Elektronenstrahlen zu vernetzen. Typische Bestrahlungsvorrichtungen, die zum Einsatz kommen können, sind Linearkathodensysteme, Scannersysteme beziehungsweise Segmentkathodensysteme, sofern es sich bei den genannten Systemen um Elektronenstrahlbeschleuniger handelt. Eine ausführliche Beschreibung des Stands der Technik und der wichtigsten Verfahrensparameter findet man bei Skelhorne "Electron Beam Processing" in Vol. 1 "Chemistry & Technology of UV & EB Formulations for Coatings, Inks & Paints" publ. Sita Technology, London 1991. Die typischen Beschleunigungsspannungen liegen im Bereich zwischen 50 kV und 500 kV, vorzugsweise 80 kV bis 300 kV. Die angewandten Strahlungsdosen bewegen sich zwischen 5 bis 150 kGy, insbesondere 20 bis 100 kGy.

Gegenstand der Erfindung ist somit die Verwendung eines Haftklebebandes, insbesondere eines doppelseitigen Klebebandes, insbesondere zur Verklebung von Fotopolymer-Druckplatten auf Druckzylindern oder Druckhülsen, wobei das Klebeband aus zumindest einem Träger und zumindest zwei Haftklebemassen-Schichten besteht, wobei zumindest eine der Haftklebemassen eine physikalisch selbstvernetzende Acrylathaftklebemasse ist.

Gegenstand der Erfindung ist die Verwendung solcher Haftklebebänder, bei denen zumindest eine der Haftklebemassen eine solche selbstvernetzende Haftklebemasse wie vorstehend beschrieben, insbesondere auf Acrylatblockcopolymerbasis, ist.

Als Trägermaterialien für die Haftklebebänder entsprechend der erfindungsgemäßen Verwendung eignen sich die dem Fachmann geläufigen und üblichen Folien, wie z. B. Polyester, PET, PE, PP, BOPP, PVC etc.). Diese Aufzählung ist nicht abschließend. Besonders bevorzugt wird eine Folie aus Polyethylenterephthalat eingesetzt.

Als Trägermaterialien für die doppelseitigen Haftklebebänder eignen sich aber auch Schaumträger. In bevorzugter Vorgehensweise werden Polymerschäume eingesetzt, wobei z. B. die Trägerschäume aus Polyolefinen - insbesondere Polyethylen oder Polypropylen - oder aus Polyurethanen oder aus Polyvinylchlorid bestehen.

Durch eine partielle Ätzung des Trägermaterials, zum Beispiel in Form von Schriftzügen, Strichen, Punkten oder anderen Motiven, kann die Masseverankerung an bestimmten Orten gezielt gestärkt werden. Auf diese Weise entstehen Sollbruchstellen, an denen die Masse bei der Demontage des Klebebandes umspult. Die Klebmasserückstände und das beschädigte Klebeband selbst verraten so ein Abziehen des Klebebandes zum Beispiel beim unautorisierten Öffnen von Kartonagen.

Generell kann durch eine Aufrauung des Trägermaterials eine Verbesserung der Haftklebemassenverankerung vorgenommen werden. Ein Weg zur Aufrauung und zur chemischen Modifizierung verläuft über die Ätzung des Trägermaterials. Neben der Ätzung kann auch auf verschiedene Weise vorbehandelt werden. So lassen sich zur Verbesserung der Verankerung die Trägermaterialien physikalisch und chemisch vorbehandeln. Zur physikalischen Behandlung wird die Folie bevorzugt mit Flamme oder Corona oder Plasma behandelt. Für die chemische Vorbehandlung wird das Trägermaterial mit Vorstrich versehen, wobei besonders bevorzugt Reaktiv-Vorstriche verwendet werden. Als Vorstrichmaterialien eignen sich z.B. Reaktivprimer.

Die Figur 1 zeigt beispielhaft die erfindungsgemäße Verwendung anhand eines doppelseitigen Haftklebebandes. Das Klebeband dient dabei zum Verkleben eines Klischees, das sich aus einer PET-Folie 2 und einer Schicht eines Fotopolymers 1 zusammensetzt.

Die Schichten 3 bis 9 bilden ein doppelseitig ausgerüstetes Klischeeklebeband, das dank seines geschäumten Trägers 8 kompressibel ist.

Dabei stellt hier die Schicht 3 die Schicht einer selbstvernetzenden Haftklebemasse und Schicht 9 die gegenüberliegende Haftklebemassenschicht dar. Weiterhin können beide Schichten 3 und 9 auf Basis selbstvernetzender Haftklebemassen vorliegen, ebenso kann aber auch, wie bereits oben erläutert, die Schicht 9 die Schicht auf Basis einer selbstvernetzenden Haftklebemasse sein; dann gilt das vorstehend für die gegenüberliegend gesagte Haftklebemassenschicht für die Schicht 3.

Das Klebeband kann vorteilhaft sowohl mit der Schicht 3 auf der Druckplatte und der Schicht auf dem Druckzylinder bzw. der Druckhülse eingesetzt werden, die Verklebung kann aber auch umgekehrt erfolgen (Schicht 9 zur Verklebung

auf der Druckplatte und Schicht 3 zur Verklebung auf dem Druckzylinder bzw. der Druckhülse).

Beginnend von der Seite, mittels derer das Klischee verklebt wird, besteht das Klebeband aus folgenden einzelnen Abschnitten:

3 selbstvernetzende Haftklebemasse zur Verankerung des Klischees auf Blockcopolymer-Basis
4 Die aufgeraute obere Oberfläche der PET-Folie 5
5 Folie auf Polyethylenterephthalat (PET)
6 Die aufgeraute untere Oberfläche der PET-Folie 5
7 Haftklebemasse zur Verankerung des geschäumten Trägers 8 auf der Folie aus PET 5
8 geschäumter Träger
9 Haftklebemasse zur Verankerung auf dem Druckzylinder

Gerade in der Druckindustrie ist es von Bedeutung, wenn die hier eingesetzten Klebebänder eine hohe Flexibilität aufweisen, also in gewissem Maße bei Druckanwendung definiert kompressibel reagieren und/oder nach Wegnahme der Belastung wieder ihre ursprüngliche Form annehmen können.
Aus diesem Grunde ist in der hier dargestellten vorteilhaften Ausführungsform eines beidseitig klebend ausgerüsteten Haftklebebandes für die erfindungsgemäße Verwendung zwischen der Folie aus Polyethylenterephthalat (PET) und zumindest einer Haftklebemasse ein geschäumter Träger vorhanden, hier insbesondere zwischen der dem Druckzylinder oder dem Sleeve zugewandten Haftklebemasse und der PET-Folie.

Vorteilhaft ist darüber hinaus, wenn der Träger 8 aus Polyurethan, Polyvinylchlorid (PVC) oder Polyolefin(en) besteht. In einer besonders bevorzugten Ausführungsform werden geschäumte Polyethylene oder geschäumte Polypropylene eingesetzt. Weiter bevorzugt ist, wenn die Oberflächen des geschäumten Trägers physikalisch vorbehandelt sind, insbesondere Corona-vorbehandelt.

Weiter vorzugsweise hat die Folie aus Polyethylenterephthalat (PET) eine Dicke von 5 $\mu$m bis 500 $\mu$m, bevorzugt 5 $\mu$m bis 60 $\mu$m, ganz besonders bevorzugt 23 $\mu$m.

Neben dem in Figur 1 dargestellten Produktaufbau kann die Stabilisierungsfolie auch aus Polyolefinen, Polyurethanen oder PVC bestehen. Sie kann durch Ätzung oder andere Weise vorbehandelt sein. So lassen sich zur Verbessserung der Verankerung Stabilisierungsfolien physikalisch und chemisch vorbehandeln. Zur physikalischen Behandlung wird die Folie bevorzugt mit Flamme oder Corona oder Plasma behandelt. Für die chemische Vorbehandlung wird die Folie mit Vorstrich versehen, wobei in einer besonders bevorzugten Vorgehensweise Reaktiv-Vorstriche verwendet werden. Als Vorstrichmaterialien eignen sich z.B. Reaktivprimer.

In einer weiteren bevorzugten Vorgehensweise wird die Stabilisierungsfolie aus PET oder einem anderen Material ein- oder beidseitig bedruckt. Diese Bedruckung kann unter einer später aufzubringenden Haftklebemasse erfolgen.

Für die Haftklebemasse 7 werden Acrylathaftklebemassen eingesetzt. Die Acrylathaftklebemassen bestehen besonders bevorzugt zu mindestens 50 Gew.-% aus Polymeren aus Acrylsäureester und/oder Methacrylsäureester bzw. deren freien Säuren mit der folgenden Formel

$$CH_2 = CH(R_1)(COOR_2),$$

wobei $R_1$ = H oder $CH_3$ und $R_2$ eine Kohlenwasserstoffkette mit 1 - 30 C-Atomen oder H ist.

Zur Polymerisation werden die Monomere dermaßen gewählt, dass die resultierenden polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen.

Als Monomere zur Herstellung der Haftklebemasse 7 werden bevorzugt die bereits zur Herstellung der Acrylatblockcopolymere genannten Monomere eingesetzt, nämlich Acryl- oder Methacrylmomonerem mit Kohlenwasserstoffresten mit 4 bis 14 C-Atomen, bevorzugt mit 4 bis 9 C-Atomen (spezifische Beispiele: Methlacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat), weiterhin monofunktionelle Acrylate bzw. Methacrylate von überbrückten unsubstituierten und/oder substituierten (z.B. durch C1-6-Alkylgruppen, Halogen oder Cyanogruppen) Cycloalkylalkoholen, insbesondere bestehend aus zumindestens 6 C-Atomen (spezifische Beispiele: Cyclohexylmethacrylate, Isobornylacrylat, Isobornylmethacrylate und 3,5-Dimethyladamantylacrylat), weiterhin Monomere mit einer oder mehreren polaren Gruppen (z.B. Carboxyl, Sulfon- und Phosphonsäure, Hydroxy-, Lactam und Lacton, N-substituiertes Amid, N-substituiertes Amin, Carbamat-, Epoxy-, Thiol-, Ether, Alkoxy-. Cyan- oder ähnliches), weiterhin basische Monomere sind z.B. N,N-Dialkyl substituierte Amide, wie z.B. N,N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid.
Weitere besonders bevorzugte Beispiele für einsetzbare Monomere sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Gycerylmethacrylat, 6-Hydroxyhexylmethacrylat, Vinylessigsäure, Tetrahydro-fufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend ist.
Weiterhin bevorzugt werden als Monomere Vinylester, Vinylether, Vinylhalogenide, Vinylidenhalogenide, Vinylverbindungen, mit aromatischen Cyclen und Heterocyclen in α-Stellung eingesetzt (Beispiele für vorgenannte: genannt: Vinylacetat, Vinylformamid, Vinylpyridin, Ethylvinylether, Vinylchlorid, Vinylidenchlorid und Acrylonitril), weiterhin Monomere, die eine hohe statische Glasübergangstemperatur besitzen, weiterhin aromatische Vinylverbindungen, wie z.B. Styrol, bevorzugt mit aromatischen Kernen aus $C_4$- bis $C_{18}$-Bausteinen, gegebenenfalls auch mit Heteroatomen (besonders bevorzugte Beispiele: 4-Vinyipyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und methacrylat, 2-Naphthylacrylat und -methacrylat sowie Mischungen aus diesen Monomeren).

Zur Herstellung der bevorzugten Poly(meth)acrylathaftklebemasse 7 werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.
Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. DuPont) oder Azodisobutyronitril (AIBN) verwendet.

Die Polymerisation wird bevorzugt derart durchgeführt, dass das mittlere Molekulargewicht $M_N$ der bei der radikalischen Polymerisation entstehenden Haftklebemasse 7 sehr bevorzugt in einem Bereich von 20.000 bis 2.000.000 g/mol liegt; speziell für die weitere Verwendung als Schmelzhaftkleber werden Haftklebemassen mit mittleren Molekulargewichten $M_N$ von 100.000 bis 500.000 g/mol hergestellt. Die Bestimmung des mittleren Molekulargewichtes erfolgt über Größenausschlußchromatographie (SEC) oder Matrix-unterstützte Laser-Desorption/Ionisations-Massenspektrometrie (MALDI-MS).

Für die Veränderung der klebtechnischen Eigenschaften der hergestellten Haftklebemasse 7 wird das Polymer zur Optimierung optional mit zumindest einem Harz abgemischt. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polymer, welches der Haftklebemasse 7 zugrunde liegt, kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

In einer weiteren vorteilhaften Weiterentwicklung werden zu der Haftklebemasse 7 ein oder mehrere Weichmacher, wie z.B. niedermolekulare Polyacrylate, Phthalate, Walöweichmacher (= wasserlösliche Weichmacher) oder Weichharze hinzudosiert.

Die Haftklebemasse 7 kann des weiteren mit einem oder mehreren Additiven wie Alterungsschutzmitteln, Lichtschutzmitteln, Ozonschutzmitteln, Fettsäuren, Harzen, Keimbildnern, Blähmitteln, Compoundierungsmitteln und/oder Beschleunigern abgemischt sein.
Weiterhin kann sie mit einem oder mehreren Füllstoffen wie Fasern, Ruß, Zinkoxid, Titandioxid, Voll- oder Hohlglas (mikro)kugeln, Mikrokugeln aus anderen Materialien, Kieselsäure, Silikaten und Kreide versetzt sein, wobei auch der Zusatz von blockierungsfreien Isocyanaten möglich ist.

Sehr bevorzugt wird die Haftklebemasse 7 vernetzt. Die Vernetzung kann entsprechend den obenbeschriebenen Methoden vorgenommen werden. Es kann thermisch oder durch actinische Strahlung vernetzt werden. Ferner können die gleichen Methoden sowie Zusätze verwendet werden.

Weiterhin kann das erfindungsgemäße Klebeband ein- oder beidseitig mit einer Abdeckung aus Papier oder aus einer entsprechenden Folie, insbesondere einer beidseitig silikonisierten, versehen sein, um ein längeres Lagern und eine bequeme Handhabung während des Gebrauchs zu gewährleisten.

Aufgrund seiner speziellen Eigenschaften lässt sich das beidseitig klebend ausgerüstete Klebeband erfindungsgemäß hervorragend zur Fixierung von Druckplatten, insbesondere von mehrschichtigen Fotopolymer-Druckplatten auf Druckzylindern oder Sleeves einsetzen.

Auf die Seite des Klebebandes (s. Figur 1), die an der Trägerschicht des Druckzylinders angesetzt wird, wird eine schwach klebende Acrylat-Haftklebemasse 9 beschichtet.

Die Haftklebemasse der Schicht 9 kann eine konventionelle Acrylathaftklebemasse oder ein Blockcopolymer sein. Die Klebmasse weist insbesondere eine Klebkraft von 0,5 bis 5,5 N/cm, bevorzugt < 2,5 N/cm, auf.

Die Klebebeschichtung 3 ist insbesondere durch eine Klebkraft von 1 bis 6 N/cm, bevorzugt 4,5 N/cm, gekennzeichnet. Die angegebenen Klebkräfte sind nach AFERA 4001 gemessen.

Das erfindungsgemäß verwendete Klebeband ist aufgrund seiner besonderen Ausführung besonders mit den auf die Druckplatte abgestimmten Klebkräften hervorragend geeignet, die Druckplatten auf den Druckzylindern zu verkleben. Einerseits ist es möglich, die Druckplatten beliebig oft vor Druckbeginn zu repositionieren, andererseits aber ist eine feste Verklebung der Platte während des Druckvorganges gewährleistet.

Die Druckplatte lässt sich vom Haftklebeband ohne irgendeine Beschädigung entfernen. Ein Abschälen der Trägerschicht der Platte oder die Bildung von unerwünschten Falten in der Platte während des Entfernens treten nicht auf. Auch nach dem Entfernen des Klebebands von dem Druckzylinder verbleiben keine Rückstände.

Im folgenden werden die Vorteile der erfindungsgemäßen Verwendung des Klebebands in mehreren Versuchen beschrieben.

## ***Experimente***

Die Verwendung von Haftklebebändern wird im folgenden durch Experimente beschrieben.

Folgende Testmethoden wurden angewendet, um die klebtechnischen Eigenschaften der hergestellten Haftklebemassen zu evaluieren.

### Testmethoden

### 180° Klebkrafttest (Test A)

Ein 20 mm breiter Streifen einer auf silikonisiertem Trennpapier beschichtete Haftklebemasse wurde auf eine 25 µm dicke mit einem Saran Primer versehende PET-Folie umlaminiert und anschließend dieses Haftklebebandmuster auf eine zweimal mit Aceton und einmal mit Isopropanol gewaschene Stahlplatte aufgebracht. Der Haftklebestreifen wurde zweimal mit einem 2 kg Gewicht auf das Substrat aufgedrückt. Das Klebeband wurde anschließend sofort mit einer Geschwindigkeit von 30 mm/min und im 180° Winkel vom Substrat abgezogen.

Die Messergebnisse sind in N/cm angegeben und sind gemittelt aus drei Messungen. Alle Messungen wurden bei Raumtemperatur unter klimatisierten Bedingungen durchgeführt.

### Gelpermeationschromatographie (Test B)

Die Bestimmung der mittleren Molekulargewichte $M_N$ und $M_W$ und der Polydisperistät PD erfolgte durch Gelpermeationschromatographie. Als Eluent wurde THF mit 0.1 Vol.-% Trifluoressigsäure eingesetzt. Die Messung erfolgte bei 25°C. Als Vorsäule wurde PSS-SDV, 5 µ, $10^3$ Å, ID 8.0 mm x 50 mm verwendet. Zur Auftrennung wurden die Säulen PSS-SDV, 5 µ, $10^3$ sowie $10^5$ und $10^6$ mit jeweils ID 8.0 mm x 300 mm eingesetzt. Die Probenkonzentration betrug 4 g/l, die Durchflussmenge 1.0 ml pro Minute. Es wurde gegen Polystyrol-Standards gemessen.

## ***Prüfmusterherstellung***

### *Herstellung eines RAFT-Reglers:*

Die Herstellung des Reglers Bis-2,2'-phenylethyltrithiocarbonats erfolgte ausgehend von 2-Phenylethylbromid mit Dischwefelkohlenstoff und Natriumhydroxid nach einer Vorschrift von Synth, Comm., 1988, 18 (13), 1531. Ausbeute 72 %, $^1$H-NMR ($CDCl_3$), δ: 7,20-7,40 ppm (m, 10 H); 3,81 ppm (m, 1 H); 3,71 ppm (m, 1 H); 1,59 ppm (d, 3 H); 1,53 ppm (d, 3 H).

*Herstellung von Polystyrol (A):*

In einem für die radikalische Polymerisation konventionellem 2 L Reaktor werden unter Stickstoffatmosphäre 362 g Styrol und 3,64 g Regler Bis-2,2'-phenylethyltrithiocarbonat vorgelegt. Es wird auf 110 °C Innentemperatur erhitzt und mit 0,15 g Vazo 67™ [2,2'-azobis(2-methylbutyronitrile), DuPont] initiiert. Nach 10 Stunden Reaktionszeit werden 100 g Toluol hinzugegeben. Nach 24 Stunden Reaktionszeit wird mit weiteren 0,1 g Vazo 67™ initiiert und weitere 24 Stunden polymerisiert. Während der Polymerisation steigt die Viskosität merklich an. Zur Kompensation werden 150 g Toluol als Endverdünnung nach 48 Stunden hinzugegeben.
Zur Aufreinigung wurde das Polymer in 4,5 Liter Methanol gefällt, über eine Fritte abfiltriert und anschließend im Vakuumtrockenschrank getrocknet.
Die Durchführung der Gelpermeationschromatographie (Test B) gegen Polystyrol-Standards ergab $M_N$ = 29.300 g/mol und $M_W$ = 35.500 g/mol.

*Herstellung von Polystyrol (B):*

In einem für die radikalische Polymerisation konventionellem 2 L Reaktor werden unter Stickstoffatmosphäre 1.500 g Styrol und 9,80 g Regler Bis-2,2'-phenylethyltrithiocarbonat vorgelegt. Es wird auf 120 °C Innentemperatur erhitzt und mit 0,1 g Vazo 67™ (DuPont) initiiert. Nach 24 Stunden Reaktionszeit werden 200 g Toluol hinzugegeben. Nach 36 Stunden Reaktionszeit werden weitere 200 g Toluol hinzugegeben. Während der Polymerisation steigt die Viskosität merklich an. Nach 48 Stunden wird die Polymerisation abgebrochen.
Zur Aufreinigung wurde das Polymer in 4,5 Liter Methanol gefällt, über eine Fritte abfiltriert und anschließend im Vakuumtrockenschrank getrocknet.
Die Durchführung der Gelpermeationschromatographie (Test B) gegen Polystyrol-Standards ergab $M_n$ = 36.100 g/mol und $M_W$ = 44.800 g/mol.

**Herstellung der Proben**

Beispiel 1

Ein für radikalische Polymerisationen konventioneller Reaktor wurde mit 32 g Trithiocarbonat-funktionalisiertem Polystyrol (A), 442 g 2-Ethylhexylacrylat, 35 g Acrylsäure und 0,12 g Vazo 67™ (Fa. DuPont) befüllt: Nach 20 Minuten Durchleiten von Argon und zweimaligen Entgasen wurde der Reaktor unter Rühren auf 70 °C hochgeheizt und für 24 h polymerisiert. Nach Beendigung der Polymerisation durch Abkühlung auf Raumtemperatur wurde mit 250 g Aceton verdünnt. Die Durchführung der Gelpermeationschromatographie (Test B) gegen Polystyrolstandards ergab $M_N$ = 114400 g/mol und $M_W$ = 217000 g/mol.

Beispiel 2

Ein für radikalische Polymerisationen konventioneller Reaktor wurde mit 32 g Trithiocarbonat-funktionalisiertem Polystyrol (A), 442 g 2-Ethylhexylacrylat, 17 g Acrylsäure und 0,12 g Vazo 67™ (Fa. DuPont) befüllt. Nach 20 Minuten Durchleiten von Argon und zweimaligen Entgasen wurde der Reaktor unter Rühren auf 70 °C hochgeheizt und für 24 h polymerisiert. Nach Beendigung der Polymerisation durch Abkühlung auf Raumtemperatur wurde mit 250 g Aceton verdünnt. Die Durchführung der Gelpermeationschromatographie (Test B) gegen Polystyrolstandards ergab $M_N$ = 98.400 g/mol und $M_W$ = 185.000 g/mol.

Beispiel 3

Ein für radikalische Polymerisationen konventioneller Reaktor wurde mit 700 g Trithiocarbonat-funktionalisiertem Polystyrol (B), 3.063 g n-Butylacrylat und 1.600 g Aceton befüllt. Unter Rühren und Stickstoffgas wurde auf 65 °C Innentemperatur hochgeheizt und 0,1 g Vazo 67™ (Fa. DuPont) hinzugegeben. Der Reaktor wurde unter Rühren auf 70 °C hochgeheizt und für 24 h polymerisiert. Nach 4 h Reaktionszeit wurde mit 300 g Aceton verdünnt. Nach 19 h wurde wiederum mit 300 g Aceton verdünnt. Nach Beendigung der Polymerisation durch Abkühlung auf Raumtemperatur wurde mit 750 g Aceton verdünnt. Die Durchführung der Gelpermeationschromatographie (Test B) gegen Polystyrolstandards ergab $M_N$ = 111.300 g/mol und $M_W$ = 197.000 g/mol.

**Klebkraftbestimmung der Beispiele 1-3**

Für die Verwendung als Haftklebemasse wurde von den Beispielen 1 bis 3 zusätzlich die Klebkraft auf Stahl

ermittelt. Die Beispiele 1 bis 3 wurden aus Lösung auf eine 25 μm dicke PET Folie (s. Testmethode A) beschichtet. Der Masseauftrag betrug nach einer Trocknung von 20 Minuten bei 120 °C im Trockenschrank 50 g/m$^2$. Die Messwerte sind in Tabelle 1 zusammengefasst.

| Tabelle 1 | |
|---|---|
| Beispiel | KK-Stahl [N/cm] |
| 1 | 5,1 |
| 2 | 3,8 |
| 3 | 3,6 |
| KK: Klebkraft auf Stahl 50 g/m$^2$ Masseauftrag | |

**Herstellung des doppelseitigen Haftklebebandverbundes:**

Eine 25 μm dicke, beidseitig mit Trichloressigsäure geätzte PET-Folie wurde mit den Beispielen 1, 2 oder 3 beschichtet (entsprechend Schicht 3, vgl. Figur 1). Der Masseauftrag betrug nach Trocknung 20 g/m$^2$. Hierfür wurde die Folie jeweils mit einem der Beispiele 1 bis 3 direkt aus Lösung beschichtet und bei 100 °C 30 min getrocknet. Die so beschichteten Muster wurden mit einem beidseitig silikonisierten Trennpapier abgedeckt. Anschließend wurde über einen Transferträger eine handelsübliche Acrylathaftklebemasse (entsprechend Schicht 7, vgl. Figur 1) mit einem Masseauftrag von 20 g/m$^2$ auf die unbeschichtete Seite des vorherigen Verbundes auflaminiert.
Im folgenden Schritt wurde ein EVA-Schaum mit einer Dicke von 500 μm und einem Raumgewicht von 200 kg/m$^3$ zukaschiert. Auf diesen Schaumträger wird dann über einen Transferträger eine handelsübliche Acrylathaftklebemasse (entsprechend Schicht 9, vgl. Figur 1) mit einem Masseauftrag von 50 g/m$^2$ auf die unbeschichteten Seite des vorherigen Verbundes auflaminiert.

**Verklebung der Druckplatten und Anwendung:**

Auf einen Stahlzylinder mit einem Durchmesser von 110 mm wurden jeweils eines der oben beschriebenen doppelseitigen Haftklebebänder mit der offen liegenden Masseseite (siehe Figur 1 Schicht 9) geklebt. Hierauf wurde eine Druckplatte der Fa. DuPont Cyrel® HOS mit einer Dicke von 1,7 mm (mit der Schicht 2, vgl. Figur 1) auf die Haftklebemasse des Klebebandes (Schicht 3 in Figur 1) verklebt. Dieser Stahlzylinder mit Druckplatte wurde anschließend in eine Druckmaschine eingelegt und dort für 16 h mit einer Druckbeistellung von 150 μm angedruckt.
Für alle Beispiele ließ sich die Druckplatte sehr einfach mit einer Hand vom doppelseitigen Klebeband rückstandsfrei entfernen.

**Patentansprüche**

1. Verwendung eines Haftklebebandes mit einer physikalisch selbstvernetzenden Acrylathaftklebemasse auf Basis zumindest eines Blockcopolymers für die Verklebung von Druckplatten, insbesondere auf Druckzylindern und/oder Druckhülsen.

2. Verwendung nach Anspruch 1, **dadurch gekennzeichnet, dass** die Haftklebemasse in Form zumindest einer Schicht vorliegt, wobei die zumindest eine Schicht der Haftklebemasse klebrige und nichtklebrige Bereiche aufweist.

3. Verwendung nach zumindest einem der vorangehenden Ansprüche, **dadurch gekennzeichnet, dass** das Haftklebeband zumindest einen Träger aufweist, insbesondere in Form einer Folie, eines Schaumes und/oder eines Verbundes der beiden vorgenannten.

4. Verwendung nach zumindest einem der Ansprüche 2 bis 3, **dadurch gekennzeichnet, dass**

die zumindest eine Schicht der Haftklebemasse bei der Verklebung der Druckplatte auf der der Druckplatte zugewandten Seite des Haftklebebandes liegt.

**5.** Verwendung nach Anspruch 4, **dadurch gekennzeichnet, dass** das zumindest eine Blockcopolymer mindestens die Einheit P(A)-P(B)-P(A) aus wenigstens einem Polymerblock P(B) und wenigstens zwei Polymerblöcken P(A) aufweist, wobei

- P(A) unabhängig voneinander Homo- und/oder Copolymerblöcke aus Monomeren A repräsentieren, wobei die Polymerblöcke P(A) jeweils eine Erweichungstemperatur im Bereich von + 20 °C bis + 175 °C aufweisen,
- P(B) einen Homo- oder Copolymerblock aus Monomeren B repräsentiert, wobei der Polymerblock P(B) eine Erweichungstemperatur im Bereich von - 130 °C bis + 10 °C aufweist,
- und die Polymerblöcke P(A) und P(B) nicht homogen miteinander mischbar sind.

## Claims

**1.** Use of a pressure sensitive adhesive tape comprising a physically self-crosslinking acrylic pressure sensitive adhesive based on at least one block copolymer for the adhesive bonding of printing plates, in particular to printing cylinders and/or printing sleeves.

**2.** Use according to claim 1, **characterized in that** the pressure sensitive adhesive is in the form of at least one layer, said at least one layer of the pressure sensitive adhesive having adhesive and nonadhesive regions.

**3.** Use according to at least one of the preceding claims, **characterized in that** the pressure sensitive adhesive tape comprises at least one carrier, in the form in particular of a film, a foam and/or a composite of the two aforementioned.

**4.** Use according to at least one of claims 2 to 3, **characterized in that** the at least one layer of the pressure sensitive adhesive, in adhesive bonding of the printing plate, is on the side of the pressure sensitive adhesive tape that faces the printing plate.

**5.** Use according to claim 4, **characterized in that** the at least one block copolymer comprises at least one unit P(A)-P(B)-P(A) composed of at least one polymer block P(B) and at least two polymer blocks P(A), where

- P(A) independently of one another represent homopolymer and/or copolymer blocks of monomers A, the polymer blocks P(A) each having a softening temperature in the range from + 20°C to + 175°C,
- P(B) represents a homopolymer or copolymer block of monomers B, the polymer block P(B) having a softening temperature in the range from -130°C to + 10°C, and
- the polymer blocks P(A) and P(B) are not homogeneously miscible with one another.

## Revendications

**1.** Utilisation d'une bande adhésive sensible à la pression ayant une masse adhésive sensible à la pression d'acrylate à auto-réticulation par voie physique à base d'au moins un copolymère séquencé pour le collage de plaques d'impression, en particulier de cylindres d'impression et/ou de viroles.

**2.** Utilisation selon la revendication 1, **caractérisée en ce que** la masse adhésive est présente sous la forme d'une couche, l'au moins une couche présentant des domaines collants et non collants.

**3.** Utilisation selon l'une quelconque des revendications précédentes, **caractérisée en ce que** la masse adhésive présente au moins un support, en particulier sous la forme d'une feuille, d'une mousse et/ou d'un composite des deux entités précédentes.

**4.** Utilisation selon au moins l'une des revendications 2 à 3, **caractérisée en ce que** l'au moins une couche de la masse adhésive repose, lors du collage de la plaque d'impression, sur la face de la bande adhésive sensible à la pression tournée vers la plaque d'impression.

**5.** Utilisation selon la revendication 4, **caractérisée en ce que**

- l'au moins un copolymère séquencé présente au moins l'unité P(A)-P(B)-P(A) faite d'au moins un bloc polymère P(B) et d'au moins deux blocs polymères P(A),
- P(A) représentant, indépendamment l'un de l'autre, des blocs homopolymères et/ou copolymères faits de monomères A, les blocs polymères P(A) présentant à chaque fois une température de ramollissement dans le domaine de + 20 °C à + 175 °C,
- P(B) représentant un bloc homopolymère ou un bloc copolymère fait de monomères B, le bloc polymère P(B) présentant une température de ramollissement dans le domaine de - 130 °C à + 10 °C,
- et les blocs polymères P(A) et P(B) ne pouvant pas être mélangés d'une manière homogène l'un à l'autre.

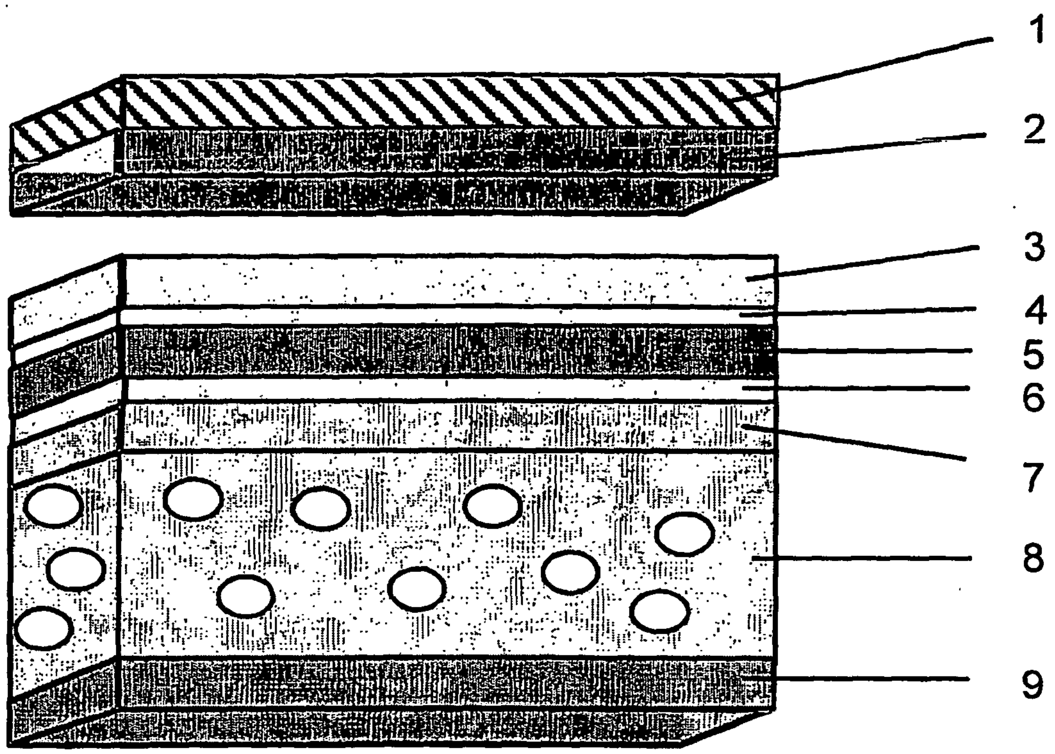


Figur 1